# EUROPEAN PATENT APPLICATION

(11) **EP 1 302 690 A2**
(43) Date of publication of application: **16.04.2003**
(21) Application number: 02021535.6
(22) Date of filing: 26.09.2002
(51) Int. Cl.: F16D 65/12, F16D 65/10, B60B 27/02

(54) **A hub and brake rotor assembly for a vehicle wheel**

(30) Priority: 10.10.2001 IT TO20010962
(71) Applicant: SKF INDUSTRIE S.P.A., 10121 Torino (IT)
(72) Inventor: Musso, Michele, 10090 Rosta (Torino) (IT); Bosco, Domenico, 10141 Torino (IT)
(74) Representative: Fioravanti, Corrado

(57) **Abstract**

A hub and brake rotor assembly for a vehicle wheel includes a hub (10) with an axially central cylindrical seat (15) for a bearing (16). The hub (10) has a cylindrical portion (10b) in which the seat (15) for the bearing (16) is formed, and a radially outward flange (10c) formed in one piece with a brake rotor (23), such as a disc or a drum.

## Description

The present invention relates to a hub and brake rotor assembly for a vehicle wheel, as defined in the preamble to Claim 1.

In the description and in the Claims which follow, terms such as "axial" or "radial", "horizontal" or "vertical" or "inner" or "outer" should be understood in relation to the condition mounted on the vehicle.

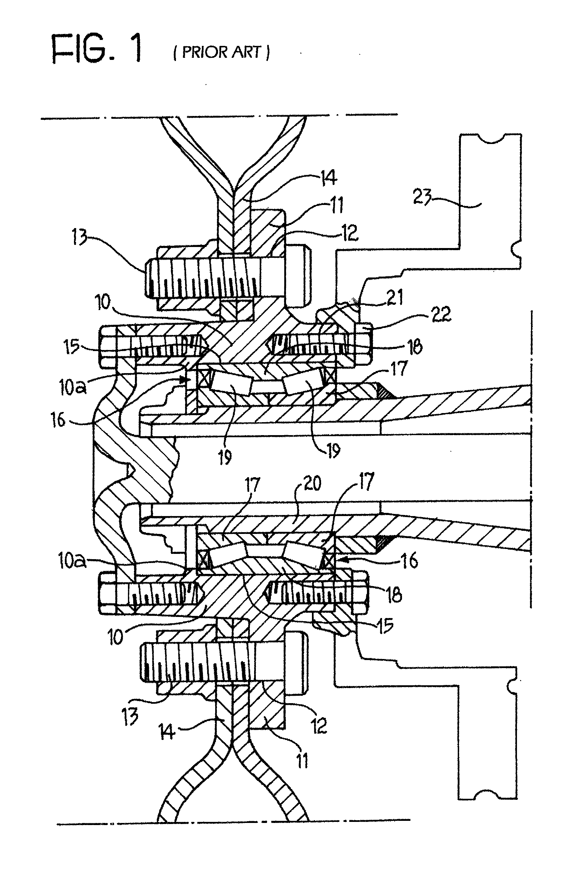

A wheel assembly of a conventional type is shown in axial section in Figure 1 of the appended drawings. With reference to Figure 1, numeral 10 indicates a radially outer annular hub, which forms a radially outer flange 11 with a first plurality of axial holes 12 formed through it for fixing the hub 10 to a wheel 14 of a vehicle by means of bolts 13. The hub 10 has an axially central cylindrical seat 15 with a so-called first generation bearing, generally indicated 16, arranged therein. The bearing 16 includes a non-rotating radially inner ring 17, a rotating radially outer ring 18 and rolling elements 19, in this case taper rollers, radially interposed between the inner ring 17 and the outer ring 18. The non-rotating inner ring 17 is fixed to a central axle 20 for supporting the wheel 14; the rotating outer ring 18, on the other hand, is fixed in the cylindrical seat 15 in the hub 10 for rotation therewith.

In the prior art, the hub 10 also has a second plurality of axial holes 21 for connecting the hub 10 by means of bolts 22 to a brake rotor 23 such as a disc or a drum.

In the prior art, the bearing 14 is also locked axially on the cylindrical seat 15 in the hub by a shoulder 10a formed in the axially outer side of the hub, as well as by other locking means on the opposite side, usually constituted by a threaded ring or a Seeger-type locking ring, co-operating with a circumferential groove in the hub or, as shown in the example of Figure 1, by a flange on the brake rotor. The outer ring 18 of the bearing is fixed in the seat 15 for rotation with the hub by force-fitting with radial interference.

One object of the invention is to provide a hub and brake rotor assembly of an improved type, which can be produced both more simply and more economically.

This and other objects are achieved by the present invention by providing a hub and brake rotor assembly having the characteristics defined in the characterising part of Claim 1.

Preferred embodiments of the invention are specified in the dependent Claims.

Characteristics and advantages of the present invention will become more apparent from the detailed description of some embodiments thereof, given with reference to the appended drawings, provided purely by way of non-limitative example, in which:
- Figure 1 is an axially sectioned view of a prior art wheel assembly for a vehicle;
- Figure 2 is an axially sectioned schematic view of a first preferred embodiment of a hub and brake rotor assembly of the invention, in which the brake rotor is a disc;
- Figure 3 is an axially sectioned schematic view of a second preferred embodiment of a hub and brake rotor assembly of the invention, in which the brake rotor is a drum.

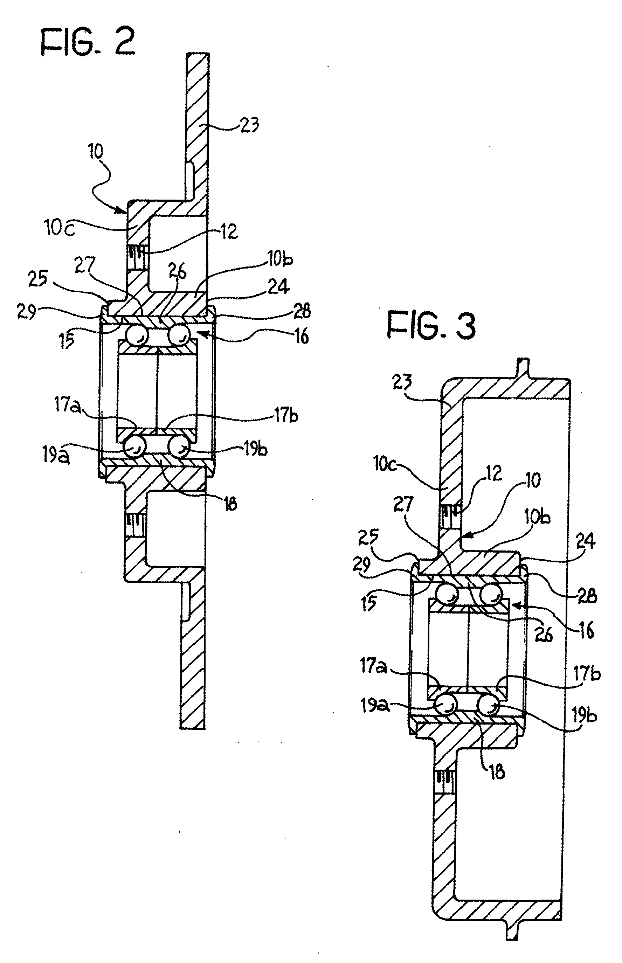

With reference to Figures 2 and 3, in which elements or components which are the same as or equivalent to those of Figure 1 have been assigned the same reference numerals, a hub and brake rotor assembly of the invention includes an annular hub 10 with a plurality of axial holes 12 for fitting the wheel (not shown) and an axial cylindrical seat 15 with a first generation bearing 16 fitted therein.

According to the invention, a brake rotor 23, such as a disc (Figure 2) or a drum (Figure 3) is formed in one piece with the hub 10. In both the examples shown by way of example in Figures 2 and 3, the hub 10 has a cylindrical portion 10b, with a seat 15 formed therein for the bearing 16, and a portion 10c, in the shape of a radially outer flange with holes 12 formed in it, which extends to form the brake rotor 23.

The cylindrical seat 15 for the bearing 16, which is identical in the two embodiments, with either a disc or a drum, is interposed axially between an essentially vertical surface 24 facing inwardly of the vehicle and an essentially vertical surface 25 facing outwardly thereof.

The bearing 16 includes a rotating radially outer ring 18, described in detail later, a pair of radially inner rings or half-rings 17a and 17b and two sets of rolling elements 19a and 19b, in this case balls, interposed between the outer ring 18 and the inner half-rings 17a and 17b.

The outer ring 18 of the bearing includes a main, central, annular portion 26, having raceways for the rolling elements 19a and 19b. The outer ring 18 has an outer cylindrical surface 27 for inserting into the cylindrical seat 15 of the hub 10. The dimensions of the cylindrical seat 15 and the cylindrical surface 27 preferably provide some radial interference, requiring the bearing to be force-fitted into the hub, thereby ensuring both axial and circumferential locking of the outer ring of the bearing relative to the hub. In order to improve the circumferential locking, it is also possible to form a plurality of radial recesses (or projections) in the cylindrical coupling surfaces of the ring 18 and the hub 10 thereby providing form-coupling between the two elements.

The outer cylindrical surface 27 extends for the entire axial dimension of the outer ring 18 and has a greater axial width than that of the seat 15.

According to another aspect of the invention, at axially opposed ends of the cylindrical surface 27, the outer ring 18 of the bearing 16 has respective radially outer projections 28 and 29, formed by cold plastic deformation, preferably by rolling, which engage axially the inner and outer lateral surfaces 24 and 25 respectively of the annular hub 10, thereby locking the ring 18 onto the hub 10 axially.

It will be clear to those skilled in the art that it is also possible, without departing from the scope of the invention, to form by cold plastic deformation only one radial projection 28, 29 on the outer ring 18, for locking axially one of the lateral surfaces 21, 22 of the hub 10. In this event, an appropriate axial shoulder will of course be provided on the ring 18, thus locking the hub 10 on this side as well.

Equally, an embodiment having at least one radial projection on the hub 10, rather than on the ring 18, obtained by cold deformation with the object of locking the ring 18 on the hub 10, should also be considered as included in the scope of the present invention.

The main advantages of a hub and brake rotor assembly according to the invention can be summarised schematically as follows:
- a reduction in the parts to be assembled;
- a reduction in manufacturing and assembly costs;
- greater rigidity of the hub and rotor assembly, resulting in a reduction in resilient deformation caused by the action of the brakes;
- the possibility of reducing runout of the braking surfaces relative to the wheel axis; and
- a reduction in weight and axial dimensions.

## Claims

1. A hub and brake rotor assembly for a vehicle wheel, of a type including:
a hub (10) for fitting to the said wheel and having an axially central cylindrical seat (15) for a bearing; and
a brake rotor (23), such as a disc or a drum, for connection to the hub (10) for rotation therewith;
**characterised in that** the brake rotor (23) is formed in one piece with the hub (10).

2. An assembly according to Claim 1, **characterised in that** the hub (10) has
a cylindrical portion (10b) with the seat (15) for a bearing formed therein, and
a vertical portion (10c), in the shape of a radially outer flange, which extends to form the brake rotor (23).

3. An assembly according to Claim 2, **characterised in that** a plurality of axial holes (12) are formed in the said flange portion (10c) of the hub, for fixing the wheel.

4. An assembly according to Claim 1, of a type which also includes a bearing (16) with a rotating radially outer ring (18) fitted in the axial cylindrical seat (15) in the hub (10) for rotation therewith, **characterised in that** the said outer ring (18) is locked axially to the hub by at least one radially outward projection (28, 29) produced by cold deformation.

5. An assembly according to Claim 4, **characterised in that** the outer ring (18) of the bearing (16) is locked axially to the hub (10) between a pair of radially outward projections (28, 29) produced by cold deformation.

6. An assembly according to Claim 4, **characterised in that** the outer ring (18) of the bearing (16) is locked axially on the hub (10) between an axial shoulder and a radially outward projection (28, 29) produced by cold deformation.

7. An assembly according to Claim 4, **characterised in that** the said at least one radially outward projection (28, 29) is formed at an axial end of the outer ring (18) of the bearing (16).
